# EUROPÄISCHE PATENTSCHRIFT

(11) **EP 2 565 033 B1**
(45) Veröffentlichungstag und Bekanntmachung des Hinweises auf die Patenterteilung: **10.02.2016**
(21) Anmeldenummer: 11179746.0
(22) Anmeldetag: 01.09.2011
(51) Int. Cl.: B32B 27/30, B32B 27/36

(54) **Verbundkörper**
Compound body
Corps composite

(43) Veröffentlichungstag der Anmeldung: 06.03.2013
(73) Patentinhaber: Senosan GmbH, 5721 Piesendorf (AT)
(72) Erfinder: Klepsch, Wilhelm, 5710 Kaprun (AT)
(74) Vertreter: Schwarz & Partner

(56) Entgegenhaltungen:
- WO-A1-00/63015
- WO-A1-02/090109
- WO-A1-2005/080484
- WO-A1-2011/012294
- WO-A2-03/018214
- DE-A1- 19 535 934
- US-A- 5 712 325
- US-B1- 6 335 380
- "UVHC8558 abrasion resistant UV curable silicone hard coat.", , 1. Januar 2007 (2007-01-01), XP55028539, Gefunden im Internet: URL:http://www.silicones.com/momentiveInte rnetDoc/MPM/Static Files/Documents/Data Sheets/UVHC8558 MB.indd.pdf [gefunden am 2012-05-31]

## Beschreibung

Die Erfindung betrifft ein Verfahren zur Herstellung von mehrschichtigen Verbunden mit verbesserten optischen und physikalisch chemischen Oberflächeneigenschaften sowie die aus dem Verfahren resultierenden mehrschichtigen Verbunde und deren Verwendung, insbesondere als Möbelfolie und für Möbel.

Die Anforderungen an hochglänzende Möbeloberflächen sind umfangreich und vielfältig: Neben den optischen Eigenschaften spielen vor allem die Kratz- und Abriebsfestigkeit sowie die Resistenz gegenüber bestimmten Chemikalien eine große Rolle. In zunehmendem Maße treten auch ökologische Anforderungen auf: Große Flächen werden lackiert und daraus ergeben sich umweltrelevante Themen wie Lösungsmittelemission der Lacke, Overspray und dergleichen. Basierend auf diesen Erkenntnissen ist man schon vor vielen Jahren dazu übergegangen, das Lackieren von Möbelfronten durch Lamination von eingefärbten, kratzfesten, hochglänzenden Folien auf Träger wie zum Beispiel MDF (= mitteldichte Faserstoffe) Paneele zu ersetzen. Ein Grund dafür waren auch die mit der Lackierung verbundenen Kosten, welche mit der Folientechnologie deutlich kostengünstiger zu bewerkstelligen sind. Im Bereich der Folien gibt es verschiedene Schichtaufbauten, bestehend aus unterschiedlichen Polymeren, welche zum großen Teil mittels Lacken kratzfest beschichtet werden. Zum Teil werden diese mittels Coextrusionsverfahren hergestellt, wobei eine Schicht aus einem kratzfesten Polymer, in der Regel Polymethylmethacrylat, als dünne Schicht aufextrudiert wird. Lackbasierte Folien zeigen in der Regel gutes Verhalten in der Kratzfestigkeit sowie in der Chemikalienbeständigkeit, während coextrudierte Mehrschichtverbunde durch prozessbedingte ausgezeichnete optische Oberflächeneigenschaften wie Glanz, Haze und Ebenmäßigkeit Vorzüge zeigen.

Zusätzlich hat sich auch Glas als Werkstoff eine gute Position geschaffen. Dieses wird mit der bevorzugten Farbe an der Rückseite bedruckt und danach weiterverarbeitet. Bedruckte Glasplatten vereinen sowohl die optischen Eigenschaften der coextrudierten Folien, als auch die physikalischen Eigenschaften, welche an Oberflächen im Möbelbereich gestellt werden, in überaus hohem Masse. Insbesondere zeigen Glasoberflächen herausragende Eigenschaften sowohl in der Mikrokratzbeständigkeit gemessen nach prEN 16094 (Ausgabestand 2009-11-1), als auch in der Chemikalienresistenz gemessen nach DIN EN 12720 (Ausgabestand Juli 2009). Allerdings ist bekannt, dass Glasplatten ein hohes Flächengewicht aufweisen und sehr schwierig zu bearbeiten sind.

Die WO 00/63015 A1 beschreibt die Verwendung einer Verbundschichtfolie bzw. -platte zum Beschichten von Formteilen, wobei diese Folie aus einem Substrat und einer strahlungshärtbaren Deckschicht besteht. Die Strahlungshärtung erfolgt nach dem Tiefziehen der Folie. Die Deckschicht ist transparent. Eine farbgebende Zwischenschicht kann eingebracht sein. Zwischen der Deckschicht und der farbgebenden Zwischenschicht kann noch eine Schicht aus PMMA oder anderen Thermoplasten sein. Nachteil dieser Folie ist, dass sie erst nach dem Verarbeitungsschritt (Thermoformen) ausgehärtet wird. Nicht ausgehärtete, also aushärtbare Lackschichten sind sehr empfindlich gegenüber mechanischen Beschädigungen, da der Lack noch nicht vernetzt und damit sehr kratzempfindlich ist, wodurch sich gravierende Nachteile in der Weiterverarbeitung der Folie z.B. in der Lamination ergeben. Durch das Anpressen der Folien auf das MDF Paneel mittels Walzen wird hoher Druck auf die sensible, nicht ausgehärtete Lackschicht ausgeübt, kleinste Verunreinigungen prägen sich in die nicht ausgehärtete Lackschicht ein. Dies wird von den Kunden nicht akzeptiert. Sind die Lacksysteme dieser Art aber ausgehärtet, so ergeben sich für die Anwendung im Möbelbereich weitere Nachteile, da sie in der Regel nicht mehr dehnbar sind, sie können also nicht verstreckt werden.

Die WO 2009/024310 A2 beschreibt einen Lack, welcher gehärtet oder teilgehärtet wird und auf ein Substrat zumindest teilweise aufgetragen wird. Der Aufbau kann ein- und mehrschichtig sein und besteht aus Thermoplasten, u. a. ABS und/oder PMMA. Der Träger hat eine Dicke von 10 - 1500 µm. Die Lackdicke beträgt nach der vollständigen Härtung 15 - 80 µm. Zwischen der Lack- und der Trägerschicht kann sich noch eine farb- oder effektfarbgebende Schicht befinden. Es wird beschrieben, dass sich das Lacksystem auf Trägerfolien auch für die Anwendungen im Möbelbereich eignet und dass diese eine Reißdehnung von 50 - 80% aufweisen, wodurch sie gebogen, gestreckt oder streckgebogen werden kann. Allerdings zeigt die Oberfläche dadurch auch reduzierte Abriebseigenschaften: Die von Glas bekannte Mikrokratzresistenz wird mit diesen Lacksystemen nicht erreicht.

Die WO 02/090109 A1 beschreibt eine mehrschichtige Möbelfolie, welche bestimmte Zugeigenschaften bei erhöhten Temperaturen erfüllt. Folienaufbauten dieser Art zeigen zwar optisch gute Oberflächeneigenschaften, sind auf Grund der hohen Reißdehnung allerdings kratzempfindlich. Diese Folien werden vorwiegend mittels thermischer Verformungsverfahren wie dem Membranpressen verarbeitet, und zeigen ein gutes Biege- und Streckverhalten. Allerdings weisen sie gravierende Mängel sowohl in der Mikrokratzbeständigkeit gemessen nach prEN 16094 (Ausgabestand 200911-1) als auch in der Chemikalienbeständigkeit gemessen nach DIN 68861-1 (Ausgabestand April 2001), Einstufung nach Grad 5 in der Klasse A1 auf.

Ein Verfahren bei dem in-Line in der Extrusion ein zumindest einschichtiges Substrat mit zumindest einer Schutzschicht beschichtet wird, wobei die Schutzschicht photochemisch durch elektromagnetische Strahlung gehärtet wird, beschreibt die WO 2011/012294 A1. Die Substratschicht ist nicht eingefärbt und wird durch (Co)-Extrusion hergestellt. Das Substrat zeigt beim Auftrag der Schutzschicht eine Temperatur von 60 - 90°C. Das Substrat kann PMMA, PC und PET umfassen.

Die WO 2005/042248 A1 beschreibt einen mehrschichtigen Verbundkörper mit einer PMMA-Deckschicht, auf die eine Lackschicht aufgedruckt ist. Der Lack kann lösungsmittelbasierend, UV-härtend oder wasserbasierend sein. Die Schichtdicke beträgt 1 - 50 µm, muss nicht vollflächig aufgetragen sein und kann Farbmittel oder Mattierungsmittel beinhalten. Der Verbundkörper kann thermisch verformt werden. Bedruckte Halbzeuge dieser Art bieten Möglichkeiten zum Dekorieren von Oberflächen, wobei der Druck vollflächig sein kann, und im Anschluss mittels Laser- oder Gravurtechnik wieder partiell abgetragen werden kann. Alternativ dazu wird nur partiell aufgedruckt.

Aus dem Stand der Technik ist kein Verbundkörper bekannt, welcher alle Anforderungen hinsichtlich optischer und mechanischer Eigenschaften bei gleichzeitig niedrigem Flächengewicht und hoher Chemikalienresistenz in ausreichendem Masse erfüllt, um dauerhaft in der Möbelindustrie - vor allem in sehr stark beanspruchten Bereichen - einsetzbar zu sein.

Aufgabe der vorliegenden Erfindung ist es daher, einen Verbundkörper bereit zu stellen, der als Ersatz zu Lack und Glas dient und dabei folgende Eigenschaften aufweist:
- Die Mikrokratzbeständigkeit und die Chemikalienbeständigkeit gegenüber herkömmlichen Verbundkörpern sollten sehr hoch sein.
- Die Oberfläche sollte gute optische Eigenschaften ähnlich wie Glas aufweisen.
- Der Verbundkörper sollte halogenfrei sein.
- Der Verbundkörper sollte nach Kundenwünschen beliebig einfärbbar sein.
- Der Verbundkörper sollte verformbar sein.
- Die verwendeten Lacksysteme müssen lösungsmittelfrei sein, um die zunehmenden ökologischen Anforderungen zu erfüllen.

Die Aufgabe wird gelöst mit einem Verbundkörper, umfassend in der genannten Reihenfolge
(i) eine die Oberfläche bildende UV-gehärtete Deckschicht (1) mit einer Schichtstärke von 1 - 20 µm,
(ii) optional eine unterhalb der Deckschicht (1) angeordnete obere Zwischenschicht (2),
(iii) eine untere Zwischenschicht (3-1), enthaltend Farbmittel und gegebenenfalls Additive zur Verbesserung der UV-Beständigkeit,
(iv) eine Substratschicht (3), enthaltend ein thermoplastisches Polymer oder ein Blend aus thermoplastischem Polymer, Farbmittel sowie gegebenenfalls Mahlgut, Recyclat oder Regenerat,
(v) optional eine optionale Rückabdeckung (3-2),
(vi) optional eine Haftvermittlerschicht (4),
welcher dadurch gekennzeichnet ist, dass die Oberfläche die folgenden Eigenschaften aufweist:
a) einen Glanzverlust von maximal 30%, vorzugsweise maximal 20% nach einem Mikrokratzbeständigkeitstest gemessen nach prEN 16094 (Ausgabestand 2010-05-15: "Laminatböden- Prüfverfahren zur Bestimmung der Mikrokratzbeständigkeit"),
b) eine numerische Bewertung von ≥ 3, bei einem Chemikalienresistenztest gemessen nach DIN EN 12720 (Ausgabestand Juli 2009: "Möbel-Bewertung der Beständigkeit von Oberflächen gegen kalte Flüssigkeiten") bei Verwendung von Aceton als Prüfflüssigkeit bei einer Einwirkdauer von 1 h
c) einen Glanz von mindestens 80, vorzugsweise mindestens 85 GLE gemessen nach ISO 2813 (Ausgabe 1999-06-01; "Beschichtungsstoffe- Bestimmung des Reflektometerwertes von Beschichtungen unter 20°, 60° und 85°") bei einem Beobachtungswinkel von 20° und
d) einen Glanzschleier von maximal 20, vorzugsweise maximal 15, gemessen nach ISO 13803 (Ausgabe 2004-09-01 "Beschichtungsstoffe- Bestimmung des Glanzschleiers von Beschichtungen bei 20°").

Es wurde herausgefunden, dass derartige erfindungsgemäße mehrschichtige Verbundkörper sowohl optische als auch mechanische, physikalische und physikalischchemische Eigenschaften in sich vereinen, welche die Anforderungen, die in der Möbelindustrie benötigt werden, erfüllen.

Die eingangs gestellte Aufgabe wird außerdem durch ein Verfahren zur Herstellung eines Verbundkörpers gelöst, welches dadurch gekennzeichnet ist, dass ein die Deckschicht bildender UV-härtender, lösungsmittelfreier Lack auf ein UV-transparentes Übertragungsmedium aufgebracht wird, wobei der UV-härtende Lack mit dem Übertragungsmedium auf die obere oder untere Zwischenschicht aufgepresst und im Anschluss daran ausgehärtet wird, indem der Lack mit UV-Strahlung bestrahlt wird, wobei die UV-Bestrahlung durch das UV-transparente Übertragungsmedium hindurch erfolgt.

Bevorzugt kann vorgesehen sein, dass die UV-Bestrahlung unter gleichzeitiger Druckausübung erfolgt.

Weiters kann vorgesehen sein, dass die UV-Bestrahlung mehrstufig erfolgt, wobei zumindest die erste Bestrahlung durch das Übertragungsmedium erfolgt.

In einer Ausführungsvariante ist vorgesehen, dass nach der UV-Bestrahlung eine Schutzfolie auf die Deckschicht aufgebracht wird.

Als UV-transparentes Übertragungsmedium wird ein Medium verstanden, welches eine Transmission für UV-Strahlung aufweist, welche ausreichend ist, dass die Polymerisation des UV- härtbaren Lacks statt findet. Die Wahl des Materials hängt dabei einerseits von der Wellenlänge ab, die der UV- härtbare Lack zum Aushärten benötigt, andererseits von der Menge an benötigter UV-Strahlung. Bei entsprechender Wahl des UV- härtbaren Lacks kann der Fachmann ein geeignetes Medium auswählen.

Es hat sich gezeigt, dass die optischen Eigenschaften, welche das UV transparente, optisch einwandfreie Übertragungsmedium aufweist, nach dem Aushärten nahezu identisch auf die Oberfläche der Deckschicht übertragen wurden, sodass die Oberfläche des Übertragungsmediums bevorzugt die anspruchsgemäßen optischen Eigenschaften (Glanz und Glanzschleier) aufweist.

Bevorzugte Ausgestaltungen und Ausführungsvarianten des erfindungsgemäßen Verfahrens aber auch des erfindungsgemäßen Verbundkörpers werden nachfolgend beschrieben.

### Beschichtungsverfahren

Es sind zahlreiche Verfahren zum Aufbringen von Beschichtungen bekannt. So können Streichen, Rollen, Sprühen, Fluten, Gießen, Rakeln, Trommeln, Spachteln und Walzen genannt werden. Die Beschreibung zu den einzelnen Methoden sind dem Buch Goldschmidt-Streitberger, "BASF- Handbuch Lackiertechnik", Vincentz-Verlag, Ausgabe 2002 zu entnehmen. Die zur Herstellung von Möbelfolien gängigen Verfahren sind Sprühen, Gießen, Rakeln und Walzen. Mittels dieser Verfahren werden Lacksysteme appliziert, die in der Regel organische Lösungsmittel oder Wasser oder beides enthalten. Die Lösungsmittel werden nach dem Beschichtungsvorgang meist in Trockenkammern abgelüftet, weshalb ein großer Energie- und Platzbedarf besteht. Außerdem erfordern speziell die auf organischen lösungsmittelbasierten Lacksysteme hohe Zusatzinvestitionen bei der Anlagentechnik, wie zum Beispiel die Installation von Explosionsschutz oder entsprechende Filtersysteme zur Absorption der flüchtigen organischen Anteile des Lackes. Zusätzlich sind organische flüchtige Bestandteile ökologisch bedenklich, da sie den Treibhauseffekt fördern. Ziel dieser Erfindung war es daher aus ökologischen und ökonomischen Gründen auch zumindest die Verwendung von organisch basierten Lösungsmittellacken zu vermeiden. Die Lösung dazu liegt in der Verwendung von lösungsmittelfreien UV-härtenden Lacksystemen.

Lösungsmittelfreie und damit umweltfreundliche UV-härtende Lacksysteme zeigen allerdings hohe Viskositäten, wodurch sie einerseits für einige der angeführten Beschichtungsmethoden verfahrenstechnisch nicht geeignet sind und andererseits auf Grund der dadurch bedingten schlechten Verlaufseigenschaften zu ungewünschten Oberflächenstrukturen (Welligkeit, Orange Peel, Hammerschlageffekt) neigen. Dadurch scheiden sie für die gegenständliche Erfindung aus, da mit ihnen keine glasartige optische Oberflächeneigenschaft erreicht wird. Zusätzlich erschwerend kann noch hinzugefügt werden, dass Lacksysteme im Allgemeinen bei der Vernetzung der Polymerketten schwinden, auch dadurch ergibt sich eine Oberflächenoptik die nicht mehr mit Glas vergleichbar ist. Die Auftragsergebnisse resultierend aus den oben angeführten Verfahren waren in Anbetracht der Oberflächenunruhe nicht zufriedenstellend. Siehe dazu auch Tabelle 2 ("Zusammenstellung der optischen Eigenschaften beschichteter Oberflächen im Möbelbereich"). Als Oberflächenunruhe bezeichnet man optische Oberflächenstrukturen, welche die Ebenmäßigkeit negativ beeinflussen. Diese sind auch unter den Begriffen Welligkeit, Orange Peel oder Hammerschlageffekt bekannt. Neben diesen physikalischen Parametern werden der Glanz und der Glanzschleier als weitere Charakterisierungsmöglichkeiten verwendet. Diese Parameter können durch Messverfahren charakterisiert werden. Theoretische Grundlagen zu den optischen Eigenschaften sind dem Buch Goldschmidt-Streitberger, "BASF- Handbuch Lackiertechnik", Vincentz-Verlag, Ausgabe 2002, S 363-372 zu entnehmen.

### Charakterisierung der visuellen Betrachtung: Welligkeit, Orange Peel, Hammerschlageffekt

Um optische Erscheinungen wie Glanz, Glanzschleier und Welligkeit zu charakterisieren, wurden Methoden zur Vermessung der Oberflächenstrukturen mittels Laserstrahlen entwickelt. Diese bestehen in der Bestimmung der sich beim Abtasten der strukturierten Oberfläche ändernden Reflexion. Anhand dieser Messverfahren soll eine geometrische Beschreibung der Oberflächenstrukturen die Zusammenhänge zur subjektiven Wahrnehmung hin ermöglichen.

Das Wave Scan Gerät (Messgerät Wave-Scan Dual^{®} der BYK-Gardner GmbH, Lausitzer Straße 8, 82538 Geretsried) bildet die visuelle Betrachtung nach und analysiert die Oberflächenstrukturen bezüglich ihrer Größe. Das Verfahren wird im Detail in der DE 103 39 227 A1 beschrieben, wobei zum besseren Verständnis auch auf die DE 41 27 215 A1 verwiesen wird. Für die Charakterisierung des Messgeräts Wave-Scan Dual^{®} wird auf die DE 10 2004 037 040 A1 verwiesen. Die Verfahrensbedingungen lassen sich aus der DE 103 39 227 A1 ableiten, sodass auf diese und die beiden anderen Schriften hierin Bezug genommen wird und auf die dortigen Ausführungen verwiesen werden darf. In der DE 103 39 227 A1 werden zur Filterung fünf Wellenlängenbereiche Wa, Wb, Wc, Wd und We genannt. Um das Auflösungsverhalten des Auges bei unterschiedlicher Entfernung zu berücksichtigen, wird das optische Profil in diese Anteile aufgeteilt. Der Shortwave und der Longwave entsprechen dabei etwa den Bereichen Wb und Wd, d.h. Wellenlängen von 0,3 bis 1,2 mm für den Shortwave und 1,2 bis 12 mm für den Longwave. Eine Zusammenstellung der Wellenlängenbereiche gibt Tabelle 1.

**Tabelle 1.: Klassifizierung der Wellenlängenbereiche zur optischen Oberflächenbeurteilung**

| | Wa | Wb | Wc | Wd | We |
|---|---|---|---|---|---|
| Wellenlänge [mm] | 0,1- 0,3 | 0,3- 1,0 | 1,0- 3,0 | 3,0- 10 | 10- 30 |

### Charakterisierung der visuellen Betrachtung: Glanz und Haze

Glanz ist die Eigenschaft einer Oberfläche, Licht ganz oder teilweise zu reflektieren, er entsteht nur, wenn sowohl die Beleuchtung gebündelt ist, als auch die Oberfläche spiegelnd reflektiert. Oberflächenstrukturen beeinflussen den Glanz einer Oberfläche. Er kann quantitativ mit Glanzmessgeräten bestimmt werden. Die exakte Definition sowie die physikalischen Zusammenhänge werden in der ÖNORM EN ISO 2813; Ausgabe 1999-06-01: "Beschichtungsstoffe- Bestimmung des Reflektometerwertes von Beschichtungen unter 20°, 60° und 85°" definiert. Als Messgerät wird für die Untersuchungen das Gerät: Haze Gloss, Serien Nummer: 868941 (Hersteller: Byk Gardner GmbH, 82538 Geretsried, Germany) verwendet. Als Messgeometrie wird der Reflektometerwert bei 20° verwendet.

Der Haze oder Glanzschleier ist eine Besonderheit des Glanzes. Er wird durch oberflächennahe Störungen im Größenbereich von 0,01 mm - also im Wellenlängenbereich des Lichtes - hervorgerufen. Die exakte Definition des Glanzschleiers sowie die physikalischen Zusammenhänge werden in der ÖNORM EN ISO 13803; Ausgabestand 2004-09-01: "Beschichtungsstoffe- Bestimmung des Glanzschleiers von Beschichtungen bei 20°" beschrieben. Als Messgerät wird für die Untersuchungen das Gerät: Haze Gloss, Serien Nummer: 868941 (Hersteller: Byk Gardner GmbH, 82538 Geretsried, Germany) verwendet.

Die Tabelle 2 zeigt eine Zusammenfassung der Messresultate optischer Eigenschaften von Glas als Ausgangspunkt für die Entwicklung, von ABS-PMMA Coextrudaten, von verschiedenen lackierten Oberflächen, hergestellt in den in der Möbelindustrie gebräuchlichsten Verfahren sowie von erfindungsgemäßen Verbundkörpern.

Wie man aus Tabelle 2 erkennen kann, zeigt Glas herausragende optische Oberflächeneigenschaften. Dies gilt auch für PMMA-ABS, allerdings schon mit Einbußen im Glanz und Glanzschleier. Folien mit lackierten Oberflächen entsprechend der gängigen Beschichtungsverfahren (wie in den Spalten P4 bis P9) zeigen Mängel im Vergleich zu Glas bzw. PMMA- ABS.

**Tabelle 2.: Zusammenstellung der optischen Eigenschaften beschichteter Oberflächen im Möbelbereich.**

| Parameter | Glas | PMMA-ABS | Erfindungsgemäßer Auftrag mit UV Lack | Walzenauftrag mit 100%-UV-Lack | Walzenauftrag mit Lösemittel UV-Lack | Walzenauftrag mit Elektronenstrahlhärtung | Sprühlackieren | Fluten | Rakeln |
|---|---|---|---|---|---|---|---|---|---|
| | P1 | P2 | P3 | P4 | P5 | P6 | P7 | P8 | P9 |
| Wa | 0,6 | 0,4 | 0,3 | 1,6 | 2,9 | 9,1 | 10,4 | 0,1 | 2,1 |
| Wb | 0,5 | 0,9 | 0,3 | 2,8 | 3,9 | 14,5 | 21 | 0,3 | 6,8 |
| Wc | 0,4 | 0,3 | 0,6 | 14,6 | 2,0 | 6,4 | 12,6 | 2,7 | 2,5 |
| Wd | 0,7 | 0,2 | 3,6 | 11,7 | 3,6 | 4,2 | 13,5 | 12,7 | 3,5 |
| We | 0,2 | 1,1 | 2,0 | 6,2 | 10,1 | 3,5 | 4,6 | 10,4 | 1,5 |
| SW | 0,3 | 0,5 | 0,2 | 2,7 | 2,7 | 15,8 | 13,5 | 2,9 | 5,2 |
| LW | 0,2 | 0,1 | 0,8 | 6,7 | 1,2 | 2,0 | 5,2 | 0,2 | 0,9 |
| Glanz | 97 | 82 | 86 | 46 | 81 | 78 | 85 | 78 | 75 |
| Haze | 0 | 3 | 8 | 19 | 28 | 25 | 20 | 90 | 26 |

| | | | | | | | | | |
|---|---|---|---|---|---|---|---|---|---|
| • Wa bis We: Wellenlängenbereiche gem. Tabelle 1 gemessen mit Messgerät Wave Scan Plus der Fa. Byk Gardner • LW: Longwave, gemessen mit Messgerät Wave Scan Plus der Fa. Byk Gardner • SW: Shortwave, gemessen mit Messgerät Wave Scan Plus der Fa. Byk Gardner • Glanz in GLE (Glanzeinheiten) nach ÖNORM EN ISO 2813; Ausgabe 1999-06-01: "Beschichtungsstoffe- Bestimmung des Reflektometerwertes von Beschichtungen unter 20°, 60° und 85°", Messgerät: Haze Gloss der Fa. Byk Gardner, Beobachtungswinkel: 20° • Haze: gemessen nach ÖNORM EN ISO 13803; Ausgabestand 2004-09-01: Beschichtungsstoffe- Bestimmung des Glanzschleiers von Beschichtungen bei 20°, Messgerät: Haze Gloss von Fa. Byk Gardner • PMMA-ABS: coextrudierter PMMA- ABS mehrschicht Verbund, Type Senosan^{®} AM1500X Stärke 0,7 mm | | | | | | | | | |

Es wurde daher ein Auftragssystem entwickelt, bei dem das lösungsmittelfreie, UV-härtende Lacksystem auf ein bis zu 1600 mm breites für UV-Licht transparentes, in der Oberfläche optisch einwandfreies Übertragungsmedium aufgebracht wird. Dieses lackbeschichtete, UV-transparente, optisch einwandfreie Übertragungsmedium wird in Folge mit einem bestimmten Anpressdruck auf das Substrat (den coextrudierten Verbundkörper) aufgepresst und sofort im Anschluss mittels UV-Lampen vernetzt, sodass der Lack zur Deckschicht aushärtet. Die UV-Bestrahlung erfolgt durch das UV transparente, optisch einwandfreie Übertragungsmedium hindurch. Dabei verbleibt das UV-transparente, optisch einwandfreie Übertragungsmedium in engem Kontakt mit dem lösungsmittelfreien UV-härtenden Lacksystem. Durch dieses Verpressen des lösungsmittelfreien UV-härtenden Lacksystems mittels des UV-transparenten, optisch einwandfreien Übertragungsmediums auf die Substratschicht bei gleichzeitigem UV-Aushärten, wird die Oberflächengüte des zukünftigen UV-lackbeschichteten Substrates durch die optisch einwandfreie Oberflächengüte des Übertragungsmediums definiert.

Die erste UV-Bestrahlung kann dabei noch während des Anpressvorgangs des lackbeschichteten, UV-transparenten Mediums auf das Substrat erfolgen. Es besteht aber auch die Möglichkeit, dass eine zweite UV-Bestrahlung zur Nachvernetzung erfolgt, wobei in diesem Fall die UV-Nachbestrahlung entweder wiederum durch das UV-transparente, optisch einwandfreie Übertragungsmediums hindurch oder nach dem Entfernen des UV-transparenten, optisch einwandfreien Übertragungsmediums direkt auf die vorgehärtete Lackschicht erfolgen kann. Durch das beidseitige Einbetten des UV-härtenden Lacksystems während der Vernetzungsphase ergibt sich der Vorteil, dass praktisch keine Parallelreaktionen, wie zum Beispiel mit dem Luftsauerstoff, auftreten können, wodurch sich eine sehr hohe Vernetzungsdichte der ausgehärteten Deckschicht ergibt. Es hat sich überraschenderweise gezeigt, dass sich die optischen Oberflächenstrukturen, welche das UV transparente, optisch einwandfreie Übertragungsmedium aufweist, nahezu identisch auf die Lackoberfläche nach dem Aushärten überträgt, sodass als optisch einwandfreie Oberfläche des Übertragungsmediums die anspruchsgemäßen optischen Eigenschaften (Glanz und Glanzschleier) definiert werden können.

Es ist vorgesehen, dass das UV-transparente, optisch einwandfreie Übertragungsmedium nach dem Aushärtevorgang von der Deckschicht (1) abgezogen wird. Ebenso kann es aber auch als Schutz der Oberfläche darauf verbleiben. Sollte das UV-transparente, optisch einwandfreie Übertragungsmedium abgezogen werden, so besteht weiters die Möglichkeit, eine Schutzfolie auf die vernetzte Lackschicht aufzubringen, um die Oberfläche für den Transportvorgang sowie die Weiterverarbeitung zu schützen. Schutzfolien dieser Art bestehen in der Regel aus Polyethylen, sie können rückseitig eine Haftschicht aufweisen.

### Charakterisierung der mechanischen Belastbarkeit der Oberfläche

Die Charakterisierung der Oberfläche erfolgt nach der Werknorm IDH-W-466 "Bestimmung der Beständigkeit gegen Mikrokratzer bei Möbelfolien" des Instituts für Holztechnologie Dresden gemeinnützige GmbH vom 20.12.2010. Diese Werknorm steht vor der unmittelbaren Zulassung als offizielle Norm und ist angelehnt an die prEN 16094:2010 Ausgabestand: 2010-05-15 "Laminatböden- Prüfverfahren zur Bestimmung der Mikrokratzbeständigkeit" mit leicht geänderten Parametern gemäß Verfahren A. Als Prüfgerät wird dabei ein Martindale- Scheuerprüfgerät verwendet. Die einzelnen Prüfkörper werden vor der Behandlung gemäß der Norm prEN 16094:2010 konditioniert und der Glanz vermessen. Danach werden die Proben mit jeweils 80 Scheuerzyklen beansprucht, wobei für jede Probe ein neues Scotch- Brite Reibmaterial der Type 7448 ultrafein verwendet wird. Bei diesem Scotch-Brite Reibmaterial handelt es sich um ein Faservlies-Handmaterial mit einem Schleifkorn Typ CF S - Siliciumkarbid (hart und spitz). Der Feinheitsgrad ist S ultra fine (FEPA-Korngröße 500-600), Farbe grau. In der prEN 16094:2010 wird ein Scotch-Brite Reibmaterial der Type 7447 (ein Faservlies-Handmaterial mit einem Schleifkorn Typ CF Material mit Aluminiumoxid-Schleifkorn (Typ A, Schleifkorn mit hoher Zähigkeit) mit Feinheitsgrad A very fine FEPA-Korngröße 320 bis 360) vorgeschlagen. Die applizierte Prüfkraft beträgt 6N.

Die Messung des Glanzes erfolgt 24 Stunden nach der Prüfung mit einem Messgerät: Haze Gloss der Fa. Byk Gardner, Beobachtungswinkel: 20° gemäß ÖNORM EN ISO 2813; Ausgabe 1999-06-01: "Beschichtungsstoffe- Bestimmung des Reflektometerwertes von Beschichtungen unter 20°, 60° und 85°".

Die Auswertung der Prüfung erfolgt nach der in der prEN 16094: 2010 unter 8.2.1 Verfahren A beschriebenen Methode, angegeben wird der Mittelwert der Glanzänderung. Die Resultate sind in der folgenden Tabelle 3 zusammengestellt:

**Tabelle 3.: Resultate der Untersuchung zur Mikrokratzbeständigkeit nach prEN 16094: 2010**

| | Ermittelter Reflektometerwert bei einer Geometrie von 20° [GLE] | | |
|---|---|---|---|
| Probe | Ausgangszustand | Nach 80 Scheuerzyklen | Glanzänderung in % |
| 1 | 83,4 | 67,3 | 19,3 |
| 2 | 92,2 | 90,1 | 2,3 |
| 3 | 80,5 | 71,0 | 11,8 |
| 4 | 97 | 96,5 | 0,5 |
| 5 | 80 | 0,6 | 99,3 |

| | | | |
|---|---|---|---|
| • Probe 1: Marktübliche Möbelfolie, Substrat Polyester, beschichtet mit lösungsmittelbasiertem UV Lack • Probe 2: Erfindungsgemäßer Aufbau, Substrat Senosan^{®} AM1500X, beschichtet mit lösungsmittelfreiem UV Lack • Probe 3: Erfindungsgemäßer Aufbau, Substrat Senosan^{®} A45, beschichtet mit lösungsmittelfreiem UV Lack • Probe 4: Marktübliches Glas zur Verwendung als Möbelfront. • Probe 5: Senosan^{®} AM1500X, unbeschichtet. Es handelt sich dabei um ein Coextrudat aus einer Deckschicht von PMMA mit einem Substrat aus ABS | | | |

Wie aus Tabelle 3 ersichtlich ist, zeigen die erfindungsgemäßen Aufbauten 2 und 3 deutlich bessere Qualitäten als die am Markt üblichen Folien und liegen sehr nahe bei Glas.

### Charakterisierung der chemischen Belastbarkeit der Oberfläche

Ein Bewertungsverfahren zur Klassifizierung der Beständigkeit von Möbelfolien gegenüber Flüssigkeiten wird mit der DIN EN 12720:2009: "Möbel- Bewertung der Beständigkeit von Oberflächen gegen kalte Flüssigkeiten", Ausgabestand Juli 2009 gegeben. Von den in diesem Bewertungsverfahren angegebenen Prüfflüssigkeiten wird Aceton als Medium für die Tests verwendet. Die Verbunde werden gemäß 6.1 der DIN EN 12720:2009 vorkonditioniert und im Anschluss den Tests unterzogen, demzufolge sollten auch die Prüfungen zu den gegenständlichen Forderungen unter diesen Bedingungen durchgeführt werden. Ebenso sind für die Prüfungen die in der Tabelle 1 unter Punkt 7.2 der DIN EN 12720:2009 definierten Prüfzeiten sowie das Auswerteverfahren gemäß 9. zu wählen.

**Tabelle 3: Prüfungsresultate zur Prüfung der Beständigkeit von Möbelfolien gegen Flüssigkeiten gem. DIN EN 12720:2009**

| | Probe 1 | Probe 2 | Probe 3 | Probe 4 |
|---|---|---|---|---|
| Medium | Aceton | Aceton | Aceton | Aceton |
| Prüfzeit | 1 h | 1 h | 1 h | 1 h |
| Einstufung | 5 | 1 | 5 | 1 |

| | | | | |
|---|---|---|---|---|
| • Probe 1: Glas welches zur Herstellung von Möbelfronten verwendet wird. • Probe 2: PMMA- ABS Coextrudat; Senosan^{®} AM1500X. Es handelt sich dabei um ein Coextrudat aus einer Deckschicht von PMMA mit einem Substrat aus ABS. • Probe 3: erfindungsgemäßer Aufbau • Probe 4: Marktübliche Möbelfolie, Substrat Polyester, beschichtet mit lösungsmittelbasiertem UV Lack | | | | |

Die Figuren zeigen erfindungsgemäße Schichtaufbauten.
- Fig.: 1 zeigt einen Schichtaufbau mit einer Deckschicht (1), einer oberen Zwischenschicht (2), einer unteren Zwischenschicht (3-1), einer Substratschicht (3) einer Rückabdeckung (3-2) und einer Haftvermittlerschicht (4).

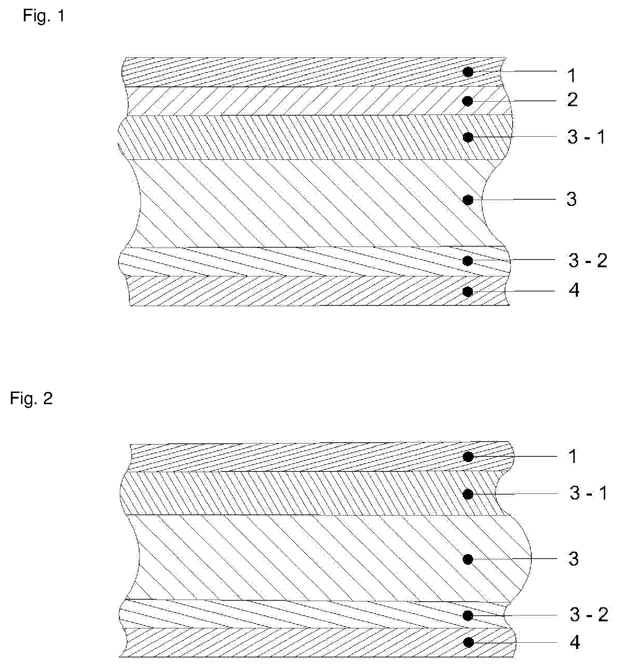

- Fig. 2: zeigt einen Schichtaufbau mit einer Deckschicht (1), einer unteren Zwischenschicht (3-1), einer Substratschicht (3) einer Rückabdeckung (3-2) und einer Haftvermittlerschicht (4).

### Verfahren zur Herstellung des Substrates

Unter Substrat versteht man den flächigen Mehrschichtverbundkörper welcher zumindest die zweite Zwischenschicht (3-1) und die Substratschicht (3) umfasst. Es wird im Extrusions- oder Coextrusionsverfahren hergestellt. Die erfindungsgemäßen mindestens zweischichtigen Verbundkörper können in einem einstufigen Verfahren mittels Adapter- oder Düsencoextrusion hergestellt werden. Dabei werden die Werkstoffe der verschiedenen Schichten in jeweils einem Extruder durch thermische Einwirkung fließfähig gemacht und in einem Adaptersystem oder einer Mehrkanaldüse oder einer Kombination von Beidem zu besagtem mehrschichtigem Substrat zusammengeführt und durch die Düse ausgestoßen, über einen Glättkalander geleitet und gekühlt. Die Kühlung erfolgt in der Regel dadurch, dass die Halbzeuge über eine Kühlbahn geleitet werden.

### Deckschicht (1)

Die Deckschicht besteht aus einer mittels UV-Strahlung polymerisierten Lackschicht. Ultraviolettstrahlung, kurz Ultraviolett oder UV-Strahlung, ist für den Menschen unsichtbare elektromagnetische Strahlung mit einer Wellenlänge, die kürzer ist als die des für den Menschen sichtbaren Lichtes, aber länger als die der Röntgenstrahlung. Dieser Bereich liegt zwischen 1 nm und 380 nm. Die Lackschicht wird hergestellt durch Aufbringen und Aushärten des Lackes nach dem erfindungsgemäßen Verfahren auf das Substrat, um den erfindungsgemäße Verbundkörper darzustellen. Dazu werden als Ausgangsmaterialien 100% UV-härtbare Lacke verwendet. Im Gegensatz zu Öl-, Dispersions- und 2-Komponentenlacken enthalten 100% UV-Lacke keine flüchtigen Bestandteile. Es sind weder Wasser noch Lösungsmittel enthalten. UV-Lacke bestehen nach Aushärtung somit zu praktisch 100% aus Festkörpern, da sie durch die UV Bestrahlung aushärten, ohne dabei im Wesentlichen an Masse zu verlieren. Neben reaktiven Gruppen wie z.B. Acrylaten (ungesättigte Polymere der Acrylsäure) können sie Reaktivverdünner, Fotoinitiatoren, Pigmente, Farbstoffe, Effektpigmente und andere Additive enthalten. Durch Verwendung von UV-Additiven (UV-Absorber und UV-Stabilisatoren) im Ausmaß von 0,01 bis 5 Gew. % werden die in den darunter liegenden Schichten eingesetzten Werkstoffe und Farbmittel vor UV-Einstrahlung geschützt, wodurch die Farbstabilität sowie die gleichbleibenden Materialeigenschaften über die Verwendungsdauer bei Bestrahlung mit UV-Licht deutlich verbessert wird. Des Weiteren kann die Deckschicht bzw. der UV-Lack transparent oder mit unterschiedlichen Farbmitteln ausgeführt sein. In der Lackschicht können auch Nanopartikel zur Verbesserung diverser Eigenschaften enthalten sein. Die Deckschicht wird auf die optionale obere Zwischenschicht (2) oder auf die untere Zwischenschicht (3-1) im erfindungsgemäßen Verfahren aufgetragen.

### Optionale obere Zwischenschicht (2)

Die optionale obere Zwischenschicht (2) zwischen der Substratschicht (3) und der Deckschicht (1) besteht - sofern sie vorhanden ist - bevorzugt aus Polymethylmethacrylat (PMMA), schlagzähmodifiziertem PMMA (impact modified PMMA/HI-PMMA) oder einem Blend daraus. Die optionale Zwischenschicht (2) kann verwendet werden, wenn die Substratschicht aus Acrylnitril-Butadien-Styrol Terpolymer (ABS), impact modifiziertem Polystyrol (PS), Acrylnitril- Styrol-Acrylester (ASA) oder Styrolcopolymeren besteht. Die wichtigsten Eigenschaften von PMMA sind in Hans Domininghaus, "Die Kunststoffe und ihre Eigenschaften", Ausgabe 1998, S 455 - 481 zusammengefasst. PMMA eignet sich als Zwischenschichtmaterial in besonderem Maße, da es eine hohe Härte und Kratzfestigkeit zeigt und transparent ist. Die hohe Härte ist dabei von Vorteil, da die darüber liegende Deckschicht (1) sehr dünn ist und aber in Kombination mit der harten oberen Zwischenschicht (2) bei druckartiger Beanspruchung Einprägungen verhindert.

Eine hohe Transparenz der oberen Zwischenschicht (2) ist von Vorteil, da sich aus der Kombination des transparenten Decklackes und der darunter liegenden transparenten Zwischenschicht (2) mit der eingefärbten Substratschicht (3) eine hohe Tiefenwirkung ähnlich der von hinterdrucktem Glas ergibt.

Im sichtbaren Lichtbereich (380 nm bis 780 nm) beträgt die spektrale Transmission des thermoplastischen Werkstoffs in einer Ausführungsvariante mindestens 80 % (bevorzugt von mindestens 85 %) gemessen an farblosen Probekörpern nach ISO 13468-2 (Ausgabestand: 1999) bei der im Verbundkörper gewählten Schichtdicke. Selbstverständlich kann der thermoplastische Werkstoff auch ein Blend an Kunststoffen sein. Im Falle, dass der thermoplastische Werkstoff ein Kunststoffblend ist, sollte dieser Kunststoffblend bei im gesamten Wellenlängenbereich von 380 nm bis 780 nm eine spektrale Transmission von mindestens 80 % gemessen an Probekörpern nach ISO 13468-2 (Ausgabenstand 1999) zeigen.

Der oberen Zwischenschicht (2) können aber auch Farbmittel zugesetzt sein. Weiters kann es erforderlich sein, UV-Additive zuzusetzen. Die obere Zwischenschicht (2) wird im Coextrusionsverfahren auf die untere Zwischenschicht (3-1) aufgebracht.

### Untere Zwischenschicht (3-1)

Die untere Zwischenschicht (3-1) umfasst ein thermoplastisches Polymer und kann beispielsweise dasselbe Polymer wie die Substratschicht umfassen. Für diesen Fall ist beispielhaft Acrylnitril-Butadien-Styrol Terpolymere (ABS) zu erwähnen. In einer Ausführungsvariante ist vorgesehen, dass die untere Zwischenschicht (3-1) glykolmodifiziertes Polyethylenterephthalat (PETG) umfasst.

Bei der Verwendung von PETG als Material für die weitere Zwischenschicht (3-1) kann eine Einfärbung mit Farbmittel erfolgen, es kann aber die Schicht auch uneingefärbt sein. UV Additive können optional zugesetzt werden. Die untere Zwischenschicht (3-1) beinhaltet bevorzugterweise aber kein Mahlgut, Recyclat oder Regenerat. Nachdem die Substratschicht (3) die farbgebende Schicht bildet und die Anforderungen der Möbelindustrie bezüglich Farbkonstanz sehr hoch sind, durch den Zusatz von Mahlgut, Recyclat oder Regenerat das Einhalten der Farbtoleranzen deutlich erschwert ist, dient die untere Zwischenschicht (3-1) dazu, eine möglichst hohe Konstanz der Farbe zu erreichen. Demzufolge werden in der unteren Zwischenschicht (3-1) Polymere analog der Substratschicht (3) mit allen geeigneten Farbmitteln eingefärbt. Weiters kann es erforderlich sein, UV-Additive zuzusetzen.

Die wesentlich voluminösere Substratschicht (3) kann dabei mit wesentlich geringeren Konzentrationen oder mit kostengünstigeren Farbmitteln eingefärbt werden als die untere Zwischenschicht (3-1). Somit können auch sehr kostspielige farbgebende Stoffe verwendet werden, da ihre Konzentration in Bezug auf die Gesamtdicke des coextrudierten Verbundkörpers sehr gering ist.

### Substratschicht (3)

Die Substratschicht (3) stellt prozentuell den größten Anteil des Mehrschichtverbundes dar. Als Werkstoffe werden thermoplastische Polymere verwendet. Als thermoplastischer Werkstoff wird im Rahmen der Erfindung ein Kunststoff verstanden, der sich in einem bestimmten Temperaturbereich thermoplastisch verformen lässt. Die thermoplastische Verformbarkeit ist ein reversibler Vorgang, sodass der thermoplastische Werkstoff durch Abkühlen und Aufwärmen bis in den verformbaren Zustand beliebig oft wiederholt werden kann. Unter thermoplastischen Werkstoffen werden reine Kunststoffe (Homopolymere, Hetero- bzw. Copolymere) und Kunststoffblends (Mischungen verschiedener Kunststoffe) zusammengefasst.

Bevorzugt können Acrylnitril-Butadien-Styrol Terpolymere (ABS), impact modifiziertes Polystyrol (PS), Acrylnitril- Styrol- Acrylester (ASA), Styrolcopolymeren, Polyolefine wie Polypropylen oder Polyethylen, Polycarbonat, Polyethylenterephthalat (PET) oder modifizierte Copolymere wie glykolmodifiziertes Polyethylenterephthalat (PETG) Verwendung finden.

Weiters kann auch ein Blend an Kunststoffen als thermoplastischer Werkstoff vorliegen bzw. kann es erforderlich sein, zusätzliche Stoffe zuzusetzen, um gewünschte Eigenschaften zu erzielen. In jedem Fall ist der verwendete Thermoplast aber im wesentlichen PVC frei.

Gegebenenfalls kann die Substratschicht Mahlgut, Recyclat oder Regenerat (z.B. von vorangegangenen Produktionsschritten oder dem Einstellen der Extrusionsanlage oder dem Randbeschnitt) enthalten. Der Substratschicht (3) können Farbmittel zugesetzt sein, die Kombination von Farbmitteln unterschiedlichster Art ist erforderlich um die von den Kunden gewünschten Farbtöne einstellen zu können. Weiters kann es erforderlich sein, UV-Additive zuzusetzen.

Ist die Substratschicht nicht ein- sondern mehrschichtig aufgebaut, so ist die Ausführung derart gestaltet, dass sich zwischen der Deckschicht (1) oder der Zwischenschicht (2) und der Substratschicht (3) eine untere Zwischenschicht (3-1) befinden kann. Diese besteht bevorzugt aus demselben Polymer wie die Substratschicht (3), insbesondere bei ABS. Bei der der Verwendung von Polyethylenterephthalat (PET) oder modifizierten Copolymeren, wie glykolmodifiziertes Polyethylenterephthalat (PETG) als Werkstoff wird bevorzugt in der unteren Zwischenschicht (3-1) glykolmodifiziertes Polyethylenterephthalat (PETG) verwendet.

### Rückabdeckung (3-2)

An der der Deckschicht (1) gegenüberliegenden Seite des erfindungsgemäßen Mehrschichtverbundes kann eine weitere optionale rückseitige Deckschicht (Rückabdeckung) (3-2) angebracht sein. Diese besteht im Wesentlichen aus dem thermoplastischen Werkstoff wie in Substratschicht (3) beschrieben, allerdings wird auch hier kein Mahlgut, Recyclat oder Regenerat zugesetzt:

Umfasst die Substratschicht (3) Polyethylenterephthalat (PET) oder modifizierte Copolymere wie glykolmodifiziertes Polyethylenterephthalat (PETG) so besteht die Rückabdeckung (3-2) vorzugsweise und im Wesentlichen aus glykolmodifiziertem Polyethylenterephthalat (PETG).

Unabhängig von den Rohstoffen, welche in der Rückabdeckung (3-2) Verwendung finden, können dieser Mattierungsmittel zugesetzt werden. Als Mattierungsmittel bezeichnet man im Allgemeinen Zusatzstoffe, welche die Oberfläche einer Beschichtung so beeinflussen, sodass sich ihr Glanzgrad senkt. Meist damit verbunden ist eine Erhöhung der Oberflächenrauhigkeit, welche im Folgeprozess, dem Laminieren ein verbessertes Verarbeitungsverhalten zeigt. Geeignete Mattierungsmittel sind dem Fachmann bekannt und umfassen z.B. anorganische Füllstoffe, insbesondere Kieselsäure oder vernetzte Polymere in Perlenform ("Polymerperlen"), vorzugsweise Acrylatperlen. Die zugesetzte Menge beträgt vorzugsweise zwischen 0,1 Gew. % und 5 Gew. %.

Besteht die Rückabdeckung (3-2) aus Polymerblends, kann durch die in der Polymerlegierung gegebene Morphologie auch eine mattierte rückseitige Deckschicht erzeugt werden, die denselben positiven Effekt auf die weitere Verarbeitung hat, wie der Zusatz eines Mattierungsmittels. Es kann daher bei diesem Aufbau normalerweise auf ein zusätzliches Mattierungsmittel verzichtet werden.

Ist die Haftung des erfindungsgemäßen Mehrschichtverbundes mit der Haftvermittler-/ Primerschicht (4) unzureichend, so können der Rückabdeckung (3-2) chemische Haftvermittler zugesetzt werden. Dies wird speziell bei Substratschichten auf Basis von Polyolefinen angewendet: Beispiele dafür wären Ethylen-Vinylacetat-Copolymere bei Polyethylen oder Maleinsäureanhydrid gepropfte Polypropylene bei Polypropylen. In beiden Fällen wird durch die beigefügten Comonomere die Polarität der Oberfläche erhöht, wodurch sich ein verbessertes Haftungsverhalten ergibt.

Die optionale Rückabdeckung (3-2) kann mit Farbmitteln eingefärbt sein, es besteht aber auch die Möglichkeit diese Schicht nicht einzufärben. Weiters besteht die Möglichkeit, der optionalen Rückabdeckung (3-2) antistatisch wirkende Additive (auch Antistatika genannt) zuzusetzen. Als Antistatika werden Stoffe bezeichnet, welche, als Additiv zugegeben, die statische Aufladung von Gegenständen verhindern bzw. abschwächen. Antistatika werden eingesetzt, um die unerwünschten Auswirkungen elektrostatischer Aufladungen, verursacht durch mechanische Reibung, zu verhindern. So kann elektrostatische Aufladung zu unerwünschten Anziehungs- oder Abstoßungseffekten, oder zu plötzlichen elektrischen Entladungen führen. Konkrete Beispiele wären die Vermeidung von Staubanziehung, von "stehenden" Haaren oder der Entzündung explosiver Mischungen durch Entladungsfunken. Besonders Materialien mit einem hohen elektrischen Widerstand, wie zum Beispiel thermoplastische Werkstoffe, sind von solchen elektrostatischen Effekten betroffen und müssen deshalb oft mit einer antistatischen Ausrüstung versehen werden.

Es hat sich gezeigt, dass Möbelfolien, welche mit Additiven dieser Art ausgestattet sind, sich wesentlich weniger statisch aufladen und dabei in wesentlich geringerem Umfang Staub anziehen. Staub an den Möbelfolien wird während des Laminationsprozesses zwischen Folien und MDF (= Mittel Dichte Faserplatten) eingeschlossen und führt zu unansehnlichen Defekten (Hoppeln) am fertigen Möbelpaneel. Erfindungsgemäß können alle Arten von Antistatika, welche das Anziehen von Stäuben in der Verarbeitung im Wesentlichen unterbinden, zugesetzt werden.

Auch hier werden die Vorzüge der Coextrusion genutzt: Die wesentlich voluminösere Substratschicht (3) muss nicht mit den Additiven oder Farbmitteln versehen werden, die in der optionalen Rückabdeckung (3-2) Verwendung finden. Somit können auch hier kostspielige Additive oder Farbmittel verwendet werden da ihre Konzentration in Bezug auf die Gesamtdicke des coextrudierten Verbundkörpers sehr gering ist.

### Haftvermittler-/Primerschicht (4)

An der Rückseite der Substratschicht (3) oder der Rückabdeckung (3-2) wird eine Haftvermittlerschicht (4) optional aufgebracht. Dazu wird die Oberfläche vor Auftrag der Primerschicht einer Oberflächenvorbehandlung durch Aktivierung unterworfen. Dies geschieht z.B. durch Coronabehandlung, Beflämmen, Plasmabehandlung oder Fluorierung. Auf diese aktivierte Oberfläche wird nun der Primer/Haftvermittler aufgetragen. Unter einer Primerschicht versteht man im Allgemeinen einen Anstrich oder eine Beschichtung zur Verbesserung der Haftung von Klebeschichten. Im Falle von Möbelfolien dient er dazu, die Haftung zum Holzpaneel, welches in der Regel aus MDF (= Mitteldichte Holzfaserplatten) besteht, zu verbessern.

### Farbmittel

Unter Farbmittel werden Pigmente, Farbstoffe oder Effektpigmente bezeichnet. Die Kombination von Farbmitteln unterschiedlichster Art ist erforderlich, um die von den Kunden gewünschten Farbtöne einstellen zu können.

Im Gegensatz zu Farbstoffen sind Pigmente in dem Trägermedium unlöslich. Als Trägermedium bezeichnet man dabei den Stoff, in den das Pigment eingearbeitet wird, beispielsweise einen Lack oder einen Kunststoff. Farbstoffe und Pigmente gehören gemeinsam zu den Farbmitteln und können anorganisch oder organisch, bunt oder unbunt sein.

Effektpigmente, wie in der unteren Zwischenschicht (3-1) verwendet, können gemäß Literatur, Gunter Buxbaum, "Industrial Inorganic Pigments", Ausgabe 1993, Seite 207-224 in zwei große Klassen geteilt werden, die Perlglanz- und die Metalleffektpigmente. Pigmente dieser Art können verwendet werden, um spezielle visuelle Effekte zu erzielen, sie können auch in Kombination mit normalen Pigmenten und/oder Farbstoffen eingesetzt werden.

### UV Additive

Der ultraviolette Anteil des Sonnenlichtes zerstört chemische Bindungen in manchen Polymeren in einem Prozess, den man Photodegradation nennt. Dies bewirkt durch die chemischen Veränderungen im Polymer auch Änderungen im chemischen und physikalischen Verhalten. Bruch, Verfärbung, Farbänderungen sind z. B. Folgen dieser Reaktionen. Um Effekte dieser Art zu unterbinden oder zu verzögern, können UV Additive zugesetzt werden. In Abhängigkeit von der Wirkungsweise dieser UV-Additive unterscheidet man in UV- Absorber und UV- Stabilisatoren. UV- Absorber führen zu einer Absorption der UV-Strahlung, welche durch das Polymer hindurchtritt und wandeln es in Wärmeenergie um. Als Beispiel für sehr wirksame Absorber können Benzophenone genannt werden. UV- Stabilisatoren hemmen die freien Radikale, welche durch die Bestrahlung mit UV-Strahlung entstehen, und stoppen die weitere Zersetzung. Als Beispiel für sehr wirksame Stabilisatoren können HALS (hindered amine light stabilizers) genannt werden.

### Ausführungsbeispiele

Die Erfindung wird nachstehend anhand von Beispielen erläutert. Dazu wurden die u. a. thermoplastischen Werkstoffe im Coextrusionsverfahren mit einer Breite von 1300 mm gefertigt und in Folge mit Hilfe des erfindungsgemäßen Verfahrens erfindungsgemäße Verbundkörper hergestellt.

### Beispiel 1:

Deckschicht (1): 11 µm UV gehärteter Lack
Optionale Zwischenschicht (2): 0,024 mm Altuglas V046 glasklares PMMA
Zwischenschicht (3-1): 0,059 mm Styron Magnum 3404 Natur ABS + Einfärbung
Substratschicht (3): 0,480 mm Styron Magnum 3404 Natur ABS + Einfärbung + 20% angefallenes Mahlgut
Optionale rückseitige Deckschicht (3-2): 0,031 mm 85% Styron Magnum 3404 Natur ABS + 15% Styron Magnum XZ96515 ABS matt

### Beispiel 2:

Deckschicht (1): 11 µm UV gehärteter Lack
Zwischenschicht (3-1): 0,061 mm Styron Magnum 3404 Natur ABS + Einfärbung
Substratschicht (3): 0,299 mm Styron Magnum 3404 Natur ABS + Einfärbung + 20% angefallenes Mahlgut
Optionale rückseitige Deckschicht (3-2): 0,030 mm 85% Styron Magnum 3404 Natur ABS + 15% Styron Magnum XZ96515 ABS matt

### Beispiel 3:

Deckschicht (1): 6 µm UV gehärteter Lack
Optionale Zwischenschicht (2): 0,024 mm Altuglas V046 glasklares PMMA
Zwischenschicht (3-1): 0,061 mm Styron Magnum 3404 Natur ABS + Einfärbung
Substratschicht (3): 0,380 mm Styron Magnum 3404 Natur ABS + Einfärbung + 30% angefallenes Mahlgut
Optionale rückseitige Deckschicht (3-2): 0,029 mm 85% Styron Magnum 3404 Natur ABS + 15% Styron Magnum XZ96515 ABS matt

### Charakterisierung des verwendeten UV Lackes:

Beinhaltet unter anderem 1,6- Hexandioldiacrylat sowie Trimethoxyvinylsilan, in geringen Mengen Triphenylphosphit. Die Dichte wird angegeben mit 1,14 g/ml bei einer Lieferviskosität von 0,15 - 0,25 Pas bei 25°C, gemessen mit einem Rotationsviskosimeter nach DIN 53019/ISO 3219, Stand 1994.

Aus den Prüfungen der Beispiele 1 bis 3 ergaben sich folgende Werte:

**Tabelle 4: Resultate der Prüfungen an Beispielen 1- 3.**

| | Dicke Lackschicht¹⁾ | Mikrokratzfestigkeit²⁾ | Chemikalienbeständigkeit³⁾ | Glanz⁴⁾ | Glanzschleier⁵⁾ | LW⁶⁾ | SW⁷⁾ |
|---|---|---|---|---|---|---|---|
| Beispiel 1 | 11 | 3,9 | 5 | 87,4 | 9,8 | 0,8 | 0,2 |
| Beispiel 2 | 11 | 6,5 | 5 | 88,2 | 5,7 | 0,9 | 0,4 |
| Beispiel 3 | 6 | 15,9 | 5 | 86,3 | 14,3 | 1,0 | 0,3 |

| | | | | | | | |
|---|---|---|---|---|---|---|---|
| ¹⁾ Dicke der Lackschicht: []= µm, gemessen mittels Mikroskop Nikon Eclipse ME600, an Dünnschnitten ²⁾ [] = % Mikrokratzbeständigkeit gemessen in Anlehnung an prEN 16094 Ausgabestand 2010-05-15: "Laminatböden- Prüfverfahren zur Bestimmung der Mikrokratzbeständigkeit" charakterisiert durch den Glanzverlust Glanz bei 20° vor der Beanspruchung abzüglich des Glanzes bei 20° nach Beanspruchung, Angabe in Prozent. ³⁾ Chemikalienresistenz gemessen nach DIN EN 12720 Ausgabestand Juli 2009: "Möbel-Bewertung der Beständigkeit von Oberflächen gegen kalte Flüssigkeiten" bei Verwendung von Aceton als Prüfflüssigkeit, einer Einwirkdauer von 1 h ⁴⁾ Glanz in GLE (Glanzeinheiten) nach ÖNORM EN ISO 2813; Ausgabe 1999-06-01: "Beschichtungsstoffe- Bestimmung des Reflektometerwertes von Beschichtungen unter 20°, 60° und 85°", Messgerät: Haze Gloss der Fa. Byk Gardner, Beobachtungswinkel: 20° ⁵⁾ Glanzschleier: gemessen nach ÖNORM EN ISO 13803; Ausgabestand 2004-09-01: Beschichtungsstoffe- Bestimmung des Glanzschleiers von Beschichtungen bei 20°, Messgerät: Haze Gloss von Fa. Byk Gardner ⁶⁾ LW: Longwave, gemessen mit Messgerät Wave Scan Plus der Fa. Byk Gardner ⁷⁾ SW: Shortwave, gemessen mit Messgerät Wave Scan Plus der Fa. Byk Gardner | | | | | | | |

## Patentansprüche

1. Verbundkörper, umfassend in der genannten Reihenfolge:
(i) eine die Oberfläche bildende UV-gehärtete lösungsmittelfreie Deckschicht (1) mit einer Schichtstärke von 1 - 20 µm,
(ii) optional eine unterhalb der Deckschicht (1) angeordnete obere Zwischenschicht (2),
(iii) eine untere Zwischenschicht (3-1), enthaltend Farbmittel und gegebenenfalls Additive zur Verbesserung der UV-Beständigkeit,
(iv) eine Substratschicht (3), enthaltend ein thermoplastisches Polymer oder ein Blend aus thermoplastischen Polymeren, Farbmittel sowie gegebenenfalls Mahlgut, Recyclat oder Regenerat,
(v) optional eine Rückabdeckung (3-2), vorzugsweise enthaltend ein thermoplastisches Polymer oder ein Blend aus thermoplastischen Polymeren
(vi) optional eine Haftvermittlerschicht (4),
**dadurch gekennzeichnet, dass** die Oberfläche die folgenden Eigenschaften aufweist:
a) einen Glanzverlust von maximal 30%, vorzugsweise maximal 20% nach einem Mikrokratzbeständigkeitstest gemessen in Anlehnung nach prEN 16094 (Ausgabestand 2010-05-15: "Laminatböden- Prüfverfahren zur Bestimmung der Mikrokratzbeständigkeit"),
b) eine numerische Bewertung von ≥ 3, bei einem Chemikalienresistenztest gemessen nach DIN EN 12720 (Ausgabestand Juli 2009: "Möbel-Bewertung der Beständigkeit von Oberflächen gegen kalte Flüssigkeiten") bei Verwendung von Aceton als Prüfflüssigkeit bei einer Einwirkdauer von 1 h
c) einen Glanz von mindestens 80, vorzugsweise mindestens 85 GLE gemessen nach ISO 2813 (Ausgabe 1999-06-01; "Beschichtungsstoffe- Bestimmung des Reflektometerwertes von Beschichtungen unter 20°, 60° und 85°") bei einem Beobachtungswinkel von 20° und
d) einen Glanzschleier von maximal 20, vorzugsweise maximal 15, gemessen nach ISO 13803 (Ausgabe 2004-09-01 "Beschichtungsstoffe- Bestimmung des Glanzschleiers von Beschichtungen bei 20°").

2. Verbundkörper nach Anspruch 1, **gekennzeichnet, durch** eine obere Zwischenschicht (2) aus Polymethylmethacrylat, schlagzäh modifiziertem Polymethylmethacrylat oder einem Blend von beiden.

3. Verbundkörper nach Anspruch 1 oder Anspruch 2, **dadurch gekennzeichnet, dass** die Substratschicht ABS oder PET umfasst.

4. Verbundkörper nach einem der Ansprüche 1 bis 3, **dadurch gekennzeichnet, dass** die untere Zwischenschicht (3-1) dasselbe Polymer wie die Substratschicht (3) umfasst.

5. Verbundkörper nach einem der Ansprüche 1 bis 3, **dadurch gekennzeichnet, dass** die untere Zwischenschicht (3-1) PETG, die Substratschicht (3) PET oder PETG und die Rückabdeckung (3-2) PETG umfassen.

6. Verbundkörper nach einem der Ansprüche 1 bis 5, **dadurch gekennzeichnet, dass** die Deckschicht (1) und/oder die obere Zwischenschicht (2) UV-Additive, insbesondere UV-Absorber und UV-Stabilisatoren, im Ausmaß von 0,01 bis 5 Gew. % aufweist.

7. Verbundkörper nach einem der Ansprüche 1 bis 6, **dadurch gekennzeichnet, dass** die obere Zwischenschicht (2) und/oder die Deckschicht (1) und/oder die Rückabdeckung (3-2) Farbmittel enthält.

8. Verbundkörper nach einem der Ansprüche 1 bis 6, **dadurch gekennzeichnet, dass** die obere Zwischenschicht (2) bei der im Verbundkörper gewählten Schichtstärke über den gesamten Wellenlängenbereich vom 380 nm bis 780 nm eine spektrale Transmission von mindestens 80 %, vorzugsweise mindestens 85 %, gemessen an ungefärbten Probekörpern nach ISO 13468-2 (Ausgabestand 1999) aufweist.

9. Verbundkörper nach einem der Ansprüche 1 bis 8, **dadurch gekennzeichnet, dass** die Rückabdeckung (3-2) Additive, ausgewählt aus der Gruppe Mattierungsmittel, Haftvermittler, Antistatika oder Mischungen daraus enthält.

10. Verfahren zur Herstellung eines Verbundkörpers nach einem der Ansprüche 1 bis 9, **dadurch gekennzeichnet, dass** ein die Deckschicht (1) bildender UV-härtender, lösungsmittelfreier Lack auf ein UV-transparentes Übertragungsmedium aufgebracht wird, wobei der UV-härtende Lack mit dem Übertragungsmedium auf die obere Zwischenschicht (2) oder untere Zwischenschicht (3-1) aufgepresst und im Anschluss daran ausgehärtet wird, indem der Lack mit UV-Strahlung bestrahlt wird, wobei die UV-Bestrahlung durch das UV-transparente Übertragungsmedium hindurch erfolgt.

11. Verfahren nach Anspruch 10, **dadurch gekennzeichnet, dass** die UV-Bestrahlung unter gleichzeitiger Druckausübung erfolgt.

12. Verfahren nach Anspruch 10 oder Anspruch 11, **dadurch gekennzeichnet, dass** UV-Bestrahlung mehrstufig erfolgt, wobei zumindest die erste Bestrahlung durch das Übertragungsmedium erfolgt.

13. Verfahren nach einem der Ansprüche 10 bis 12, **dadurch gekennzeichnet, dass** nach der UV-Bestrahlung eine Schutzfolie auf die Deckschicht (1) aufgebracht wird.

14. Möbelfolie, umfassend einen Verbundkörper nach einem der Ansprüche 1 bis 9.

15. Möbel, umfassend einen Möbelkörper sowie einen Verbundkörper nach einem der Ansprüche 1 bis 9.

## Claims

1. A composite body, including in the order mentioned:
(i) an UV-cured solvent free cover layer (1) forming the surface and having a layer thickness of 1 - 20 µm,
(ii) optionally an upper intermediate layer (2) arranged underneath the cover layer (1),
(iii) a lower intermediate layer (3-1), containing colorants and optionally additives for improving UV resistance,
(iv) a substrate layer (3), containing a thermoplastic polymer or a blend of thermoplastic polymers, colorants as well as optionally grinding material, recyclate or regenerate,
(v) optionally a rear cover (3-2), preferably containing a thermoplastic polymer or a blend of thermoplastic polymers,
(vi) optionally an adhesion promoter layer (4),
**characterized in that** the surface has the following features:
a) a gloss loss of at most 30%, preferably at most 20% following a micro-scratch resistance test measured following prEN 16094 (as of 2010-05-15: "Laminate floor coverings - Test method for the determination of micro-scratch resistance"),
b) a numerical assessment of ≥3, in a chemical resistance test measured according to DIN EN 12720 (as of July 2009: "Furniture - Assessment of surface resistance to cold liquids") using acetone as a test liquid for a test duration of 1 h,
c) a gloss of at least 80, preferably at least 85 GLE measured according to ISO s (as of 1999-06-01: "Coating materials - Determination of the reflectometer value of coatings at 20°, 60° and 85°") at an observation angle of 20° and
d) a haze of at most 20, preferably at most 15, measured according to ISO 13803 (as of 2004-09-01: "Coating materials - Determination of the haze of coatings at 20°").

2. A composite body according to claim 1, **characterized by** an upper intermediate layer (2) of polymethyl methacrylate, impact-resistant-modified polymethyl methacrylate or a blend of both.

3. composite body according to claim 1 or 2, **characterized in that** the substrate layer includes ABS or PET.

4. A composite body according to any of claims 1 to 3, **characterized in that** the lower intermediate layer (3-1) includes the same polymer as the substrate layer (3).

5. A composite body according to any of claims 1 to 3, **characterized in that** the lower intermediate layer (3-1) includes PETG, the substrate layer (3) PET or PETG and the rear cover (3-2) PETG.

6. A composite body according to any of claims 1 to 5, **characterized in that** the cover layer (1) and/or the upper intermediate layer (2) has UV additives, in particular UV absorbers and UV stabilizers, to the extent of 0.01 to 5% per weight.

7. A composite body according to any of claims 1 to 6, **characterized in that** the upper intermediate layer (2) and/or the cover layer (1) and/or the rear cover (3-2) includes colorants.

8. A composite body according to any of claims 1 to 6, **characterized in that** the upper intermediate layer (2) has in the layer thickness selected for the composite body over the entire wavelength range from 380 nm to 780 nm a spectral transmission of at least 80 %, preferably at least 85 %, measured with non-coloured test bodies according to ISO 13468-2 (as of 1999).

9. A composite body according to any of claims 1 to 8, **characterized in that** the rear cover (3-2) contains additives, selected from the group consisting of matting agents, adhesion promoters, antistatic agents or mixtures thereof.

10. A method for the production of a composite body according to any of claims 1 to 9, **characterized in that** an UV-curing surface-coating material forming the cover layer (1) and being free of solvents is applied to an UV-transparent transfer medium, wherein the UV-curing surface-coating material is pressed with the transfer medium onto the upper intermediate layer (2) or the lower intermediate layer (3-1) and consequently cured by exposure of the surface-coating material to UV radiation, wherein the UV irradiation is realized through the UV-transparent transfer medium.

11. A method according to claim 10, **characterized in that** the UV irradiation is realized with simultaneous application of pressure.

12. A method according to claim 10 or claim 11, **characterized in that** UV irradiation is realized in several steps, wherein at least the first irradiation is realized through the transfer medium.

13. A method according to any of claims 10 to 12, **characterized in that** a protective layer is applied to the cover layer (1) following UV irradiation.

14. A furniture film, including a composite body according to any of claims 1 to 9.

15. A piece of furniture, including a furniture body as well as a composite body according to any of claims 1 to 9.

## Revendications

1. Corps composite, incluant, dans la succession suivante :
(i) une couche de couverture (1) exempte de solvant et durcie aux rayons UV, formant la surface supérieure et présentant une épaisseur de couche de 1 à 20 µm,
(ii) en option une couche intermédiaire supérieure (2) agencée au-dessous de la couche de couverture (1),
(iii) une couche intermédiaire inférieure (3-1), contenant des colorants et le cas échéant des additifs pour améliorer la résistance aux rayons UV,
(iv) une couche de substrat (3) contenant un polymère thermoplastique ou un mélange de polymères thermoplastiques, de colorants ainsi que le cas échéant de produits broyés, de produits recyclés ou de produits régénérés,
(v) en option une couche de couverture postérieure (3-2), contenant de préférence un polymère thermoplastique ou un mélange de polymères thermoplastiques
(vi) en option une couche favorisant l'adhérence (4),
**caractérisé en ce que** la surface supérieure présente les propriétés suivantes :
a) une perte de brillance au maximum de 30 %, de préférence au maximum de 20 % après un test de résistance aux micro-rayures, mesurée d'après la norme prEN 16094 (édition 2010-05-15 : "Laminatböden - Prüfverfahren zur Bestimmung der Mikrokratzbeständigkeit" [Sols stratifiés - procédure de contrôle pour la détermination de la résistance aux micro-rayures]),
b) une valeur numérique de ≥ 3, lors d'un test de résistance aux produits chimiques mesurée d'après la norme DIN EN 12 720 (édition juillet 2009 : "Môbel - Bewertung der Beständigkeit von Oberflächen gegen kalte Flüssigkeiten" [Meubles- évaluation de la résistance de surface à l'encontre de liquides froids]) en utilisant de l'acétone à titre de liquide de contrôle et avec une durée d'action d'une heure
c) une brillance d'au moins 80, de préférence d'au moins 85 GLE, mesurée d'après la norme ISO 2813 (édition 1999-06-01 : "Beschichtungsstoffe - Bestimmung des Reflektometerwertes von Beschichtungen unter 20°, 60° und 85°" [Matériaux de revêtement - détermination de la valeur de réflectométrie de revêtement sous 20°, 60° et 85°]) sous un angle d'observation de 20°, et
d) un voile au maximum de 20, de préférence au maximum de 15, mesuré d'après la norme ISO 13803 (édition 2004-09-01 "Beschichtungsstoffe - Bestimmung des Glanzschleiers von Beschichtungen bei 20°" [Matériaux de revêtement - détermination du voile de revêtements à 20°]).

2. Corps composite selon la revendication 1, **caractérisé par** une couche intermédiaire supérieure (2) en polyméthyl méthacrylate, en polyméthyl méthacrylate modifié pour résister aux chocs, ou un mélange des deux.

3. Corps composite selon la revendication 1 ou 2, **caractérisé en ce que** la couche de substrat inclut du ABS ou du PET.

4. Corps composite selon l'une des revendications 1 à 3, **caractérisé en ce que** la couche intermédiaire inférieure (3-1) inclut le même polymère que la couche de substrat (3).

5. Corps composite selon l'une des revendications 1 à 3, **caractérisé en ce que** la couche intermédiaire inférieure (3-1) contient du PETG, la couche de substrat (3) contient du PET ou PETG, et la couverture postérieure (3-2) contient du PETG.

6. Corps composite selon l'une des revendications 1 à 5, **caractérisé en ce que** la couche de couverture (1) et/ou la couche intermédiaire supérieure (2) contient des additifs UV, en particulier des absorbeurs de rayons UV et des stabilisateurs UV, dans une quantité de 0,01 à 5 % en poids.

7. Corps composite selon l'une des revendications 1 à 6, **caractérisé en ce que** la couche intermédiaire supérieure (2) et/ou la couche de couverture (1) et/ou la couverture postérieure (3-2) contient des colorants.

8. Corps composite selon l'une des revendications 1 à 6, **caractérisé en ce que** la couche intermédiaire supérieure (2) présente, pour l'épaisseur de couche choisie dans le corps composite, sur la totalité de la plage de longueurs d'onde de 380 nm à 780 nm une transmission spectrale d'au moins 80 %, de préférence d'au moins 85 %, mesurée sur des corps échantillon sans colorant d'après la norme ISO 13 468-2 (édition 1999).

9. Corps composite selon l'une des revendications 1 à 8, **caractérisé en ce que** la couverture postérieure (3-2) contient des additifs, sélectionnées parmi le groupe des agents de matification, agents favorisant l'adhésion, agents antistatiques, ou leurs mélanges.

10. Procédé pour la fabrication d'un corps composite selon l'une des revendications 1 à 9, **caractérisé en ce que** l'on applique sur un support de transmission transparente aux rayons UV une laque exempte de solvant et durcissant aux rayons UV, qui forme la couche de couverture (1), dans lequel la laque durcissant aux rayons UV avec le support de transmission est appliquée à la presse sur la couche intermédiaire supérieure (2) ou sur la couche intermédiaire inférieure (3-1) et est durcie ensuite, en appliquant à soumettant la laque un rayonnement UV, l'application du rayonnement UV ayant lieu à travers le support de transmission transparent aux rayons UV.

11. Procédé selon la revendication 10, **caractérisé en ce que** l'application du rayonnement UV a lieu en exerçant simultanément une pression.

12. Procédé selon la revendication 10 ou 11, **caractérisé en ce que** l'application du rayonnement UV a lieu en plusieurs étapes, telles qu'au moins la première application a lieu à travers le support de transmission.

13. Procédé selon l'une des revendications 10 à 12, **caractérisé en ce qu'**après application du rayonnement UV on applique une feuille de protection sur la couche de couverture (1).

14. Feuille pour meuble, incluant un corps composite selon l'une des revendications 1 à 9.

15. Meuble, incluant un corps de meuble ainsi qu'un corps composite selon l'une des revendications 1 à 9.
